# EUROPÄISCHE PATENTANMELDUNG

(11) **EP 1 719 611 A1**
(43) Veröffentlichungstag der Anmeldung: **08.11.2006**
(21) Anmeldenummer: 05009770.8
(22) Anmeldetag: 04.05.2005
(51) Int. Cl.: B29C 70/46, D04H 1/46

(54) **Verfahren zur Herstellung eines thermoplastisch verformbaren faserverstärkten Halbzeugs**

(71) Anmelder: Quadrant Plastic Composites AG, 5600 Lenzburg (CH)
(72) Erfinder: Brentrup, Karl-Ludwig, 5103 Möriken (CH); Dittmar, Harri, 67271 Battenberg (DE)
(74) Vertreter: Felder, Peter

(57) **Zusammenfassung**

Die Erfindung betrifft ein kontinuierliches Verfahren zur Herstellung eines thermoplastisch verformbaren Halbzeugs aus einem thermoplastischen Kunststoff und Verstärkungsfasern, das folgende Verfahrensstufen umfasst:
A. Thermoplastfasern und Verstärkungsfasern werden zu einem Mischvlies vermischt,
B. das Mischvlies wird durch Nadeln oder thermisch verfestigt,
C. das verfestigte Mischvlies wird auf Temperaturen oberhalb des Erweichungspunktes des Thermoplasten erwärmt,
D. auf einem beheizten Presswerkzeug und einem gekühlten Presswerkzeug mit einem Druck von weniger als 0,8 bar mindestens 3 sec lang verpresst, und

gegebenenfalls werden Funktionsschichten auf das Halbzeug aufgepresst.

Die Erfindung betrifft ferner ein thermoplastisch verformbares Halbzeug aus einem thermoplastischen Kunststoff und Verstärkungsfasern einer mittleren Länge von 20 bis 60 mm mit einem Gehalt an Luftporen von 35 bis 65 Vol.%.

## Beschreibung

Die Erfindung betrifft ein Verfahren zur Herstellung eines thermoplastisch verformbaren, faserverstärkten Halbzeugs aus einem Mischvlies, welches Thermoplastfasern und Verstärkungsfasern enthält.

Thermoplastisch verformbare Halbzeuge, welche Verstärkungsfasern, insbesondere Glasfasern enthalten, werden in zunehmendem Maße zur Herstellung von Formteilen, insbesondere für Kraftfahrzeugteile eingesetzt. Derartige "Kunststoffbleche" zeichnen sich durch hohe Zähigkeit und Festigkeit aus. Die GMT-Halbzeuge werden in großtechnischem Maßstab hergestellt durch Zusammenführen von Endlos- Glasmatten und Thermoplast- Schmelzebahnen auf einer Doppelbandpresse. Diese Arbeitsweise erfordert einen hohen Energieaufwand, da die zähflüssige Schmelze bei Drücken weit oberhalb von 1 bar in die Matte eingepresst werden muss. Fasergehalte von mehr als 45 Gew.% und Flächengewichte unter 2000 g/m² sind in der Praxis nur schwierig erreichbar. Da die Glasmatten im Allgemeinen aus Faserbündeln aufgebaut sind, ist die Tränkung nie ganz vollständig und gleichmäßig, so dass mikroskopisch inhomogene Bereiche auftreten, was zu hohen Standardabweichungen in den mechanischen Eigenschaften führt. Dies ist auch der Fall bei thermisch expandierten GMT-Platten, die aufgrund der Rückstellkräfte der vernadelten Glasfasermatten Luftblasen enthalten, die aber ungleichmäßig in der Matrix verteilt sind.

In der DE- A 36 14 533 ist ein Verfahren zur Herstellung von Formkörpem aus thermoplastischen Kunststoffen, die eine Verstärkungseinlage enthalten, beschrieben. Dabei wird in Anlehnung an die Textilfasertechnologie ein Mischvlies aus Thermoplastfasern und Verstärkungsfasem nach dem Krempel- oder Airlay-Verfahren hergestellt und z.B. durch Nadeln verfestigt. Zuschnitte aus diesem Mischvlies werden erwärmt und direkt, ohne vorheriges Konsolidieren, zu dreidimensionalen Formkörpern verpresst. Eine vollständige Durchtränkung ist hierbei, vor allem bei kompliziert geformten Bauteilen, jedoch kaum möglich, so dass die mechanischen Eigenschaften der Formteile zu wünschen übrig lassen.

Nach WO 98/3508 werden in einem aufwendigen Verfahren erst Misch- Faserstränge aus Verstärkungsfasem und Thermoplastfasern hergestellt, aus denen dann ein Vlies gebildet wird. Dieses Vlies wird auf einer Doppelbandpresse bei erhöhter Temperatur und hohem Druck zu einem Halbzeug verpresst.

In WO 02/062563 ist ein kontinuierliches Verfahren zur Herstellung von thermoplastisch verformbaren, dünnen Halbzeugen aus einem thermoplastischen Kunststoff und langen Verstärkungsfasem beschrieben, Es umfasst folgende Schritte:
A. Thermoplastfasern und Verstärkungsfasern werden trocken zu einem Mischvlies vermischt,
B. das Mischvlies wird durch Nadeln verfestigt,
C. das verfestigte Mischvlies wird erwärmt und
D. auf einem Kalander oder einem Glättwerk zum Halbzeug verpresst,
E gegebenenfalls werden Funktionsschichten aufgepresst.

WO 02/076711 beschreibt ein ähnliches Verfahren zur Herstellung von dicken Mischvliesen, wobei das Verpressen in Stufe D auch durch eine Kaschiereinrichtung bei Drücken zwischen 1 und 10 bar durchgeführt werden kann. Es hat sich aber gezeigt, dass bei so hohen Drücken die Luftporen fast vollständig aus dem erweichten Mischvlies herausgedrückt werden, und dass die Schmelze in der Länge und in der Breite auseinanderfließt, was eine unkontrollierte Flächengewichtsänderung und ein Verziehen der Halbzeugbahn zur Folge hat und dazu führt, dass die Ränder der Halbzeugbahn nicht glatt und gerade, sondern wellig sind.

Ähnliche Probleme ergeben sich bei den Verfahren nach EP-B 593 716 und US-A 4,978,489, bei denen das Verpressen des Mischvlieses durch einander gegenüberliegende Druckrollen erfolgt. Dabei wird so stark verpresst, dass das erhaltene Halbzeug nur noch höchstens 20 Vol.%, vorzugsweise 10 bis 15 Vol.% Luftporen enthält. Bei dem Verfahren nach US- A 4,948,661 wird ein Mischvlies zwischen Heizplatten oder auch in einer Doppelbandpresse so lange verpresst, bis die Luft praktisch vollständig aus dem konsolidierten Produkt herausgepresst ist.

Das Verpressen von Mischvliesen in Kalandern oder durch Druckrollen hat den weiteren Nachteil, dass nur mit niedrigen Produktionsgeschwindigkeiten gearbeitet werden kann, und dass durch die abrupte Verdichtung im Walzenspalt sich eine Wulst bildet, was zu starker Dehnung und sogar zur Bildung von Löchem im Produkt führen kann.

Der Erfindung lag daher die Aufgabe zugrunde, ein einfaches kontinuierliches Verfahren zur Herstellung eines verzugfreien Halbzeugs aus einem thermoplastischen Kunststoff und Verstärkungsfasem zu entwickeln, das Luftporen in gleichmäßiger Verteilung enthält und problemlos zu Fertigteilen umformbar ist, die in allen Richtungen hervorragende, gut reproduzierbare Eigenschaften aufweisen.

Diese Aufgabe wird durch das erfindungsgemäße Verfahren gelöst. Dieses umfaßt folgende Verfahrensschritte:
A. Thermoplastfasern und individuelle, nicht gebundene Verstärkungsfasern werden miteinander vermischt. Als Thermoplasten kommen alle verspinnbaren thermoplastischen Kunststoffe in Frage, z.B. Polyolefine, wie Polyethylen und Polypropylen, Polyamide, lineare Polyester, thermoplastische Polyurethane, Polycarbonat, Polyacetale, sowie entsprechende Copolymere und Thermoplastmischungen, ferner hochtemperaturbeständige Polymere, wie Polyarylate, Polysulfone, Polyimide, Polyetherimide und Polyetherketone. Besonders bevorzugt ist Polypropylen mit einem MFI (230°C, 2.16 kg) nach DIN 53735 größer als 20 g/10 min, vorzugsweise zwischen 25 und 150 g/10 min. Die Thermoplastfasern weisen im Allgemeinen eine mittlere Länge (Gewichtsmittel) von 20 bis 100 mm auf.
   Bevorzugte Verstärkungsfasern sind Glasfasern, daneben können auch Kohlenstofffasern und Aramidfasern eingesetzt werden, ferner Naturfasern, z.B. solche aus Flachs, Jute, Hanf, Kenaf, Sisal und Baumwolle. Die Verstärkungsfasern weisen im Allgemeinen ebenfalls eine mittlere Länge (Gewichtsmittel) von 20 bis 100 mm auf. Damit sie gut mit den Thermoplastfasern mischbar sind, müssen sie als individuelle, nicht gebundene Fasern vorliegen, d.h. sie dürfen nicht mit polymeren Bindemitteln gebunden sein.
   In einer bevorzugten Ausführungsform der Erfindung unterscheiden sich die mittlere Länge der Thermoplastfasern und der Verstärkungsfasem um maximal 25 %, vorzugsweise um maximal 10 % und insbesondere um maximal 3 %. Die bevorzugten Glasfasern sind als Endlosfasern oder als Schnittfasem in Längen von 0,5 inch (12,7 mm) im Handel. Es können auch Schnittfasem mit einer Länge von beispielsweise 1 inch (25,4 mm) oder 2 inch (50,8 mm) bezogen werden. In der Praxis schneidet man die Thermoplastfasern auf etwa die gleich Länge wie die Glasfasern; d.h. bei einer bevorzugten Ausführungsform der Erfindung sind sowohl Polypropylenfasern als auch Glasfasern praktisch gleich lang und weisen eine mittlere Länge (Gewichtsmittel) im Bereich zwischen 25 und 55 mm auf.
   Diese Angleichung der Faserlängen hat den Vorteil, dass bei der Herstellung des Mischvlieses keine Entmischungen der Fasern auftreten kann, was zu Inhomogenitäten im Halbzeug, d.h. zu glasreichen und polymerreichen Bereichen führen würde.
   Die Thermoplastfasern und Verstärkungsfasem werden im Gewichtsverhältnis 10 : 90 bis 80 : 20, vorzugsweise 20 : 80 bis 65 : 35 und insbesondere 25 : 75 bis 55 : 45, bevorzugt nach dem Krempel- oder Airlay- Verfahren trocken miteinander vermischt. Dabei entsteht ein als endloses Band vorliegendes Mischvlies mit einem Flächengewicht von vorzugsweise 200 bis 2500 g/m², insbesondere von 250 bis 1500 g/m². Beim Vermischen der Fasern werden Glasfaserbündel geöffnet, so dass die Fasern als individuelle Filamente vorliegen.
B. Das erhaltene Mischvlies wird vorzugsweise ein- oder beidseitig durch Nadeln verfestigt. Dies kann auf üblichen Nadelstühlen mit Filznadeln geschehen. Durch das Nadeln werden einerseits die Verstärkungsfasem etwas gebrochen, so dass die mittlere Faserlänge reduziert wird; andererseits wird durch das Nadeln das Mischvlies verfestigt, so dass es in den nachfolgenden Verfahrensschritten problemlos handhabbar ist. Grundsätzlich ist es auch möglich, die Verfestigung thermisch, z.B. durch IR- Bestrahlung oder mittels Heißluft vorzunehmen. Dabei sollten die Thermoplastfasern aber nicht vollständig aufschmelzen, sondern nur soweit anschmelzen, dass das Halbzeug einen für die Hantier- und Transportierbarkeit ausreichenden Zusammenhalt bekommt.
C. Das verfestigte Mischvlies wird, vorzugsweise in einem Durchluftofen oder durch IR- Bestrahlung, auf Temperaturen oberhalb der Erweichungstemperatur des Thermoplasten erwärmt. Vorzugsweise sollte die Temperatur 20 bis 60 °C oberhalb der Erweichungstemperatur liegen; bei Polypropylenfasern liegt sie bevorzugt zwischen 180 und 220 °C, insbesondere zwischen 190 und 210 °C. Die Thermoplastschmelze kann die Einzelfilamente gut benetzen und man erhält eine wesentlich bessere und gleichmäßigere Durchtränkung der Glasfasern als bei dem oben beschriebenen GMT- Verfahren, wo die Glasfaserbündel kaum in Einzelfilamente geöffnet sind. Dies hat z.B. eine schlechtere Homogenität der Eigenschaften bei Fertigteilen zur Folge, die aus GMT- Halbzeug hergestellt wurden.
D. Unmittelbar anschließend wird das erwärmte Mischvlies verpresst. Erfindungsgemäß wird dazu nacheinander ein beheiztes und ein gekühltes Presswerkzeug angewandt, in welchen das Mischvlies jeweils mit einem Druck von weniger als 0,8 bar, vorzugsweise von 0,05 bis 0,5 bar mindestens 3 sec lang, vorzugsweise 5 bis 60 sec lang verpresst wird. Die obere Grenze von 0,8 bar ist kritisch; bei höheren Drücken wird der Gehalt an Luftporen zu gering. Als Presswerkzeuge werden bevorzugt Pressplatten eingesetzt, an denen zwei umlaufende Gewebebänder, z.B. aus teflonbeschichtetem Glas- oder Aramidgewebe, entlang gleiten, welche das Mischvlies mitführen. Vorzugsweise ist das beheizte Presswerkzeug auf mehr als 80 °C, insbesondere auf 100 bis 220 °C temperiert und das gekühlte Presswerkzeug auf weniger als 30 °C, insbesondere auf 15 bis 25 °C.
   Vorzugsweise ist in Stufe D zusätzlich vor dem beheizten Presswerkzeug noch ein beheiztes Walzenpaar und nach dem beheizten Presswerkzeug noch ein gekühltes Walzenpaar angeordnet.
   Das beheizte Walzenpaar dient dabei vor allem dazu, Funktionsschichten zuzuführen und an das erwärmte Mischvlies anzuhaften. Dazu genügt ein geringer Liniendruck von weniger als 10 N/mm. Das insbesondere auf 150 bis 200 °C beheizte Presswerkzeug bewirkt, dass die Verstärkungsfasern in die Thermoplastschmelze eingedrückt und ausreichend gut benetzt werden, und dass Luftblasen teilweise herausgedrückt werden. Das gekühlte Walzenpaar drückt mit einem Liniendruck von vorzugsweise 10 bis 50 N/mm die Funktionsschichten fest auf das teilkonsolidierte Halbzeug, so dass sie sich mit diesem verbinden. Ferner bewirkt es, falls erforderlich, eine weitere Dickenreduzierung. Durch das gekühlte Presswerkzeug wird die Thermoplastschmelze vollends eingefroren, so dass Rückstellkräfte nicht mehr wirksam werden können, und das Halbzeug wird konsolidiert.
   Das Verpressen wird vorzugsweise so schonend durchgeführt, dass das entstehende Halbzeug noch einen Gehalt an Luftporen zwischen 25 und 75 Vol.%, insbesondere von 35 bis 65 Vol.% aufweist. Dadurch wird es, im Gegensatz zu kompakten oder nahezu kompakten Halbzeugen, z.B. durch Thermoformen in Presswerkzeugen leichter verarbeitbar. Infolge der oben beschriebenen gleichmäßigen Imprägnierung der Glasfasern mit der Thermoplastmatrix sind die Luftporen homogen in dem Halbzeug verteilt, im Gegensatz zu expandiertem GMT, das eine ungleichmäßige Verteilung der Luftblasen aufweist.

Gegebenenfalls werden gleichzeitig mit dem Verpressen ein- oder beidseitig Funktionsschichten an das erwärmte Mischvlies herangeführt und mitverpresst. Dies können Dekorschichten, dünne Faservliese, Thermoplastfolien oder Stoffbahnen sein.

Das entstandene flächige Halbzeug weist vorzugsweise eine Dicke von 0,5 bis 10 mm, insbesondere von 1,0 bis 5,0 mm auf. Für spezielle Anwendungen kann die Dicke auch mehr als 5,0 mm betragen. Die mittlere Länge (Gewichtsmittel) der Verstärkungsfasem im Halbzeug beträgt 15 bis 100 mm, vorzugsweise sind die Fasern 20 bis 60 mm und insbesondere 25 bis 50 mm lang.

Ein weiterer Gegenstand der Erfindung ist ein thermoplastisch verformbares Halbzeug aus 20 bis 65 Gew.% eines thermoplastischen Kunststoffs und 80 bis 35 Gew.% Verstärkungsfasem mit einer mittleren Länge (Gewichtsmittel) von 20 bis 60 mm, welches 35 bis 65 Vol.%, vorzugsweise 45 bis 55 Vol.% Luftporen in gleichmäßiger Verteilung enthält. Bevorzugt hat das Halbzeug ein Flächengewicht von 300 bis 1500 g/m² und enthält 25 bis 55 Gew.% Polypropylen und entsprechend 75 bis 45 Gew.% Glasfasern. Diese weisen vorzugsweise eine mittlere Länge (Gewichtsmittel) von 25 bis 50 mm auf und sind miteinander vernadelt. Vorzugsweise enthält das Halbzeug 35 bis 80 Gew.% Glasfasem, die überwiegend, vorzugsweise zu mehr als 80%, insbesondere zu mehr als 90% als individuelle Filamente vorliegen.

Die DE-A 195 20 477 betrifft eine faserverstärkte Folie oder Platte, die thermisch expandiert ist und demzufolge Luftblasen enthält. Wie oben beschrieben, sind diese Lufteinschlüsse sehr ungleichmäßig in der Platte verteilt, wohingegen im erfindungsgemäßen Halbzeug die Luftporen gleichmäßig verteilt sind. Ferner liegen in expandierten GMT-Platten die Glasfasern überwiegend als ungeöffnete Faserbündel vor. In beiden Fällen ist der Unterschied an REM- Aufnahmen gut erkennbar. Im Beispiel 1 wird eine expandierte Platte beschrieben, deren Flächengewicht weit oberhalb von 2000 g/m² liegt. Die Länge der Glasfasern beträgt 100 mm und der Glasfaseranteil 30 Gew.%.

Das erfindungsgemäß hergestellte Halbzeug kann aufgerollt und gelagert werden oder gleich zu Platten, z.B. mit den Abmessungen 400 bis 3000 mm x 300 bis 2300 mm geschnitten werden. Es kann zu dreidimensionalen Fertigteilen thermoplastisch verarbeitet werden. Dazu werden entsprechende Zuschnitte zunächst auf Temperaturen oberhalb der Erweichungstemperatur des Thermoplasten erwärmt und dann umgeformt. Dabei expandiert das Halbzeug aufgrund der Rückstellkräfte des vernadelten Faservlieses und zwar umso mehr, je mehr Luftporen es enthält. Ein z. B. auf mehr als das Doppelte, vorzugsweise auf mehr als das Dreifache seiner ursprünglichen Dicke expandiertes Halbzeug iässt sich viei leichter umformen als eine kompakte Platte. Beim Umformen wird das Halbzeug in üblichen zweiteiligen Formen verpresst oder durch Tiefziehen verformt.

Die Fertigteile sind im Transportsektor als Automobil-, Eisenbahn- und Flugzeugteile, aber auch als Karosserieteile, sowie als großflächige Paneele und Möbelteile verwendbar, ferner als Decklagen in Sandwichteilen für Schalungselemente oder Trennwände.

## Patentansprüche

1. Kontinuierliches Verfahren zur Herstellung eines thermoplastisch verformbaren Halbzeugs aus 10 bis 80 Gew.% eines thermoplastischen Kunststoffs und 90 bis 20 Gew.% Verstärkungsfasem durch folgende Verfahrensschritte:
A. Thermoplastfasern und individuelle, nicht gebundene Verstärkungsfasern werden trocken miteinander zu einer endlosen Bahn vermischt,
B. das erhaltene Mischvlies wird durch Nadeln oder thermisch verfestigt,
C. das verfestigte Mischvlies wird auf Temperaturen oberhalb des Erweichungspunktes des Thermoplasten erwärmt,
D. anschließend wird das erwärmte Mischvlies zum Halbzeug verpresst,
**dadurch gekennzeichnet, dass** das Verpressen nacheinander durch ein beheiztes und ein gekühltes Presswerkzeug erfolgt, in welchen das Mischvlies jeweils mit einem Druck von weniger als 0,8 bar mindestens 3 sec lang verpresst wird.

2. Verfahren nach Anspruch 1, **dadurch gekennzeichnet, dass** gleichzeitig mit dem Verpressen in Stufe D Funktionsschichten auf das erwärmte Mischvlies aufgepresst werden.

3. Verfahren nach Anspruch 1, **dadurch gekennzeichnet, dass** die mittlere Länge (Gewichtsmittel) sowohl der Thermoplastfasern als auch der Verstärkungsfasern 20 bis 100 mm beträgt, wobei sich die Längen der beiden Faserarten um maximal 25 % unterscheiden.

4. Verfahren nach Anspruch 1, **dadurch gekennzeichnet, dass** das Verpressen so schonend durchgeführt wird, dass das entstehende Halbzeug noch einen Gehalt an Luftporen von 25 bis 75 Vol.%, vorzugsweise von 35 bis 65 Vol.% aufweist.

5. Verfahren nach Anspruch 1, **dadurch gekennzeichnet, dass** als Presswerkzeug Pressplatten eingesetzt werden, an denen umlaufende Gewebebänder entlang gleiten, welche das Mischvlies mitführen.

6. Verfahren nach Anspruch 1, **dadurch gekennzeichnet, dass** in dem beheizten Presswerkzeug eine Temperatur von mehr als 80 °C, vorzugsweise von 100 bis 220 °C und in dem gekühlten Presswerkzeug eine Temperatur von weniger als 30 °C, vorzugsweise von 15 bis 25 °C herrscht.

7. Verfahren nach Anspruch 1, **dadurch gekennzeichnet, dass** in den Presswerkzeugen ein Druck von jeweils 0,05 bis 0,5 bar angewandt wird.

8. Verfahren nach Anspruch 1, **dadurch gekennzeichnet, dass** die Verweilzeit in den Presswerkzeugen jeweils 5 bis 60 sec beträgt.

9. Verfahren nach Anspruch 1, **dadurch gekennzeichnet, dass** in Stufe D zusätzlich vor dem beheizten Presswerkzeug noch ein beheiztes Walzenpaar und nach dem beheizten Presswerkzeug noch ein gekühltes Walzenpaar angeordnet ist.

10. Verfahren nach Anspruch 7, **dadurch gekennzeichnet, dass** in dem beheizten Walzenpaar ein Liniendruck von weniger als 10 N/mm angewandt wird.

11. Verfahren nach Anspruch 7, **dadurch gekennzeichnet, dass** in dem gekühlten Walzenpaar ein Liniendruck von 10 bis 50 N/mm angewandt wird.

12. Thermoplastisch verformbares Halbzeug aus 20 bis 65 Gew.% eines thermoplastischen Kunststoffs und 80 bis 35 Gew.% Verstärkungsfasern einer mittleren Länge (Gewichtsmittel) von 20 bis 60 mm, **gekennzeichnet durch** einen Gehalt an Luftporen von 35 bis 65 Vol.%, die in der Matrix gleichmäßig verteilt sind.

13. Thermoplastisch verformbares Halbzeug nach Anspruch 12, **dadurch gekennzeichnet, dass** es aus 25 bis 55 Gew.% Polypropylen und 75 bis 45 Gew.% Glasfasern besteht und ein Flächengewicht von 300 bis 1500 g/m² aufweist.

14. Thermoplastisch verformbares Halbzeug nach Anspruch 12, **dadurch gekennzeichnet, dass** die Glasfasern eine mittlere Länge (Gewichtsmittel) von 25 bis 50 mm aufweisen und miteinander vemadelt sind.

15. Thermoplastisch verformbares Halbzeug nach Anspruch 12, **dadurch gekennzeichnet, dass** es 35 bis 80 Gew.% Glasfasern enthält, die überwiegend, vorzugsweise zu mehr als 80% als individuelle Filamente vorliegen.
